# EUROPÄISCHE PATENTSCHRIFT

(11) **EP 2 766 243 B1**
(45) Veröffentlichungstag und Bekanntmachung des Hinweises auf die Patenterteilung: **01.06.2016**
(21) Anmeldenummer: 12751298.6
(22) Anmeldetag: 14.08.2012
(51) Int. Cl.: B62D 15/02, B60Q 9/00, G08G 1/14, G08G 1/16

(54) **VERFAHREN ZUM VERBESSERN EINES PARKASSISTENTEN SOWIE EINPARKSYSTEM**
METHOD FOR IMPROVING A PARKING ASSISTANT AND PARKING SYSTEM
PROCÉDÉ PERMETTANT D'AMÉLIORER UNE AIDE AU STATIONNEMENT ET SYSTÈME DE STATIONNEMENT

(30) Priorität: 13.10.2011 DE 102011084479
(43) Veröffentlichungstag der Anmeldung: 20.08.2014
(73) Patentinhaber: Robert Bosch GmbH, 70442 Stuttgart (DE)
(72) Erfinder: RAISCH, Florian, 71116 Gaertringen (DE); NIEMZ, Volker, 71277 Rutesheim (DE)
(86) Internationale Anmeldenummer: PCT/EP2012/065860
(87) Internationale Veröffentlichungsnummer: WO 2013/053514

(56) Entgegenhaltungen:
- EP-A1- 1 783 035
- EP-A2- 1 148 461
- WO-A1-2009/101514
- US-A1- 2008 231 469

## Beschreibung

Die vorliegende Erfindung betrifft ein Verfahren zum Verbessern eines Parkassistenten eines Fahrzeugs zur Durchführung eines unterstützen oder automatischen Einparkvorganges des Fahrzeugs sowie ein Einparksystem zum Verbessern eines Parkassistenten eines Fahrzeugs.

### STAND DER TECHNIK

Parkassistenten sind grundsätzlich bekannt und werden oftmals als Bestandteil von Fahrerassistenzsystemen in Fahrzeugen, insbesondere Kraftfahrzeugen, verwendet. Moderne Parkassistenten erlauben dabei ein unterstütztes oder automatisches Einparken des Fahrzeugs in verschiedene Arten von Parklücken, z. B. in längs zur Fahrbahn orientierte Parklücken oder in Querparklücken. Dabei wird für die jeweils vorliegende Art der Parklücke durch den Benutzer und/oder automatisch ein bestimmter Einparkvorgang ausgewählt. Der Parkassistent führt anschließend anhand der gewählten Art des Einparkvorganges den Einparkvorgang aus bzw. unterstützt den Fahrer beim Einparkvorgang.

Aus der DE 10 2009 006 336 A1 ist dabei ein Verfahren bekannt, durch das ein durch einen Parkassistenten durchgeführter oder unterstützter Einparkvorgang überwacht werden kann. Eine Überwachung der Fahrdynamik eines Fahrzeuges in verschiedenen Situationen durch ein Fahrerassistenzsystem ist ferner aus der DE 10 2006 039 183 A1 bekannt. Hierbei werden Daten von Sensoren gesammelt und in einer Auswerteeinheit ausgewertet und bewertet, um eine bevorstehende Fahrsituation vorherzusagen. Gegebenenfalls wird der Fahrer des Fahrzeugs und/oder Fahrer von Fahrzeugen in der Umgebung durch das Fahrerassistenzsystem über die bevorstehende Fahrsituation informiert beziehungsweise gewarnt.

Aufgrund der hohen Variabilität an möglichen Parkszenen, die anhand gespeicherter Arten von Einparkvorgängen klassifiziert werden müssen, kann oftmals keine genügend genaue Ausführung des Einparkvorganges gewährleistet werden. Da die Arten geplanter Einparkvorgänge und der Ablauf der Durchführung des geplanten Einparkvorganges in den bekannten Parkassistenten oftmals unveränderbar gespeichert sind, können sich Abweichungen von einem vom Benutzer gewünschten Ergebnis eines Einparkvorganges vom tatsächlich durchgeführten Einparkvorgang bei ähnlichen Parkszenen wiederholen.

Aus der US 2008/0231469 A1 ist ein Verfahren zur Ermittlung einer Parklücke, mit den folgenden Schritten bekannt:
- Vermessen einer Parklücke und Ausgabe einer gemessenen Länge der Parklücke,
- Vergleichen der ermittelten Länge mit mindestens einem Grenzwert und Ermittlung eines Anzeigesignals,
- Ausgabe des Anzeigesignals an den Fahrer,
- Aufnahme von Fahrdynamiksignalen während eines Einparkvorganges,
- Bewertung des Einparkvorganges auf Grundlage der aufgenommenen Fahrdynamiksignale und Ausgabe eines Bewertungssignals,
- und Änderung des mindestens einen Grenzwertes in Abhängigkeit von dem Bewertungssignal und dem Anzeigesignal

Dabei wird eine adaptive Parklückenvermessung geschaffen, bei der eine selbsttätige Anpassung einer Bewertung der Parklückenlänge an das jeweilige Fahrverhalten und Fahrvermögen des betreffenden Fahrers erfolgt.

Der nächstliegende Stand der Technik ist in der US 2008/0231469 A1 zu sehen.

### OFFENBARUNG DER ERFINDUNG

Es ist daher Aufgabe der Erfindung, die voranstehend beschriebenen Nachteile bekannter Parkassistenten von Fahrzeugen zur Durchführung eines unterstützten oder automatischen Einparkvorganges des Fahrzeugs zu beheben. Insbesondere ist es Aufgabe der vorliegenden Erfindung, ein Verfahren zum Verbessern eines Parkassistenten eines Fahrzeugs sowie ein Einparksystem zum Verbessern eines Parkassistenten eines Fahrzeugs bereitzustellen, welche in einfacher und kostengünstiger Weise die Genauigkeit, mit der ein Parkassistent Einparkvorgänge in beliebigen Parkszenen durchführen kann, erhöhen.

Voranstehende Aufgabe wird gelöst durch ein Verfahren mit den Merkmalen des unabhängigen Anspruchs 1 sowie durch ein Einparksystem mit den Merkmalen des unabhängigen Anspruchs 10. Weitere Merkmale und Details der Erfindung ergeben sich aus den Unteransprüchen, der Beschreibung und den Zeichnungen.

In einem ersten Aspekt der Erfindung wird die Aufgabe durch ein Verfahren zum Verbessern eines Parkassistenten eines Fahrzeugs zur Durchführung eines unterstützten oder automatischen Einparkvorganges des Fahrzeugs gelöst. Das erfindungsgemäße Verfahren zeichnet sich durch folgende Schritte aus:
a) Feststellen der Art des geplanten Einparkvorganges,
b) Unterstütztes oder automatisches Ausführen des Einparkvorganges durch den Parkassistenten anhand der festgestellten Art des Einparkvorganges,
c) Speicherung von Daten des Einparkvorganges im Parkassistenten,
d) Bewertung des Einparkvorganges,
e) Verbesserung des Parkassistenten des Fahrzeugs für die festgestellte Art des Einparkvorganges durch eine Rechnereinheit anhand der gespeicherten Daten und der Bewertung des Einparkvorgangs.

Ein erfindungsgemäßes Verfahren setzt also auf bekannten Parkassistenten auf und verbessert diese. Die Schritte a) und b) des Verfahrens bewirken dabei die Durchführung eines Einparkvorganges. In Schritt a) wird dabei, insbesondere durch im Fahrzeug vorhandene Sensoren wie Ultraschallsensoren, Radarsensoren, optische Sensoren und/oder Kamerasysteme, die Art des geplanten Einparkvorganges festgestellt. Dabei wird u. a. eine Parklücke detektiert und vermessen, eine Einparktrajektorie berechnet und insbesondere festgestellt, ob es sich um eine längs zur Fahrbahn orientierte Parklücke, eine quer zur Fahrbahn orientierte Parklücke oder um eine sogenannte Schrägparklücke handelt. Schritt b) des Verfahrens beinhaltet die Ausführung des Einparkvorganges durch den Parkassistenten anhand der festgestellten Art des Einparkvorganges. Dabei kann es sich um ein automatisches Ausführen des Einparkvorganges handeln, bei dem der Parkassistent sämtliche Fahrfunktionen des Fahrzeugs übernimmt. Alternativ kann der Einparkvorgang auch unterstützt durchgeführt werden, wobei hier z. B. der Parkassistent nur die Lenkbewegung des Fahrzeugs übernimmt oder auf eine sonstige geeignete Art und Weise den Fahrer beim Einparken unterstützt. Anschließend werden im Schritt c) des Verfahrens die Daten des Einparkvorganges im Parkassistenten gespeichert. Bei den Daten kann es sich dabei insbesondere um Geschwindigkeitsdaten, Lenkbewegungen, Zeitpunkten von Lenkbewegungen und sämtliche Sensordaten des Fahrzeugs handeln. Damit werden insbesondere sämtliche Informationen des durchgeführten Einparkvorganges gespeichert, der Einparkvorgang kann somit aus den Daten rekonstruiert werden. Anschließend wird im Schritt d) des Verfahrens der Einparkvorgang bewertet. Dabei können insbesondere die benötigte Zeit für den Einparkvorgang, die Endposition des Fahrzeugs innerhalb der Parklücke, die Anzahl der benötigten Züge bis zum Erreichen der Parkposition und/oder Abstände zu den Rändern der Parklücke in die Bewertung einfließen. Im letzten Schritt e) des Verfahrens wird der Parkassistent des Fahrzeugs für die festgestellte Art des Vorganges durch eine Rechnereinheit anhand der gespeicherten Daten und der Bewertung des Einparkvorganges verbessert. Dabei können, insbesondere durch die gespeicherten Daten, eine Park-Soll-Position, d. h. die Position, die das Fahrzeug nach Ausführung des Einparkvorganges in der Parklücke einnehmen soll, innerhalb der Parklücke berechnet werden und mit der, ebenfalls durch die gespeicherten Daten gestützte, Park-Ist-Position, d. h. die Position, die das Fahrzeug nach dem durchgeführten Einparkvorgang tatsächlich in der Parklücke einnimmt, verglichen werden. Durch die Bewertung des Einparkvorganges können die Unterschiede der Park-Ist- und Park-Soll-Position in Beziehung, insbesondere durch das Setzen von Schwerpunkten in der Bewertung auf einzelne Kriterien auch gewichtet in Beziehung, gesetzt werden. Um den Parkassistenten eines Fahrzeugs zu verbessern, wird in der Rechnereinheit, basierend auf den gespeicherten Daten, der gewichteten Bewertung und dem ursprünglich vorhandenen Einparkvorganges ein neuer Einparkvorgang berechnet, der bei der vorliegenden Parkszene den Einparkvorgang besser, d. h. mit einer besseren Bewertung, ausgeführt hätte. Bei der nächsten Ausführung eines Einparkvorganges der gleichen Art durch den Parkassistenten kann durch dieses Verfahren ein besseres Ergebnis, d. h. eine geringere Abweichung der Park-Ist-Position von der Park-Soll-Position, erreicht werden.

In einer weiteren Ausgestaltung des erfindungsgemäßen Verfahrens, kann vorgesehen sein, dass die Bewertung durch den Benutzer und/oder automatisch durchgeführt wird. Eine Bewertung durch den Benutzer, d. h. insbesondere den Fahrer des Fahrzeugs, kann der Fahrer den Parkassistenten selbst bewerten, d. h. seine subjektive Bewertung über den Einparkvorgang abgeben. Die Durchführung des Verfahrens zum Verbessern eines Parkassistenten eines Fahrzeugs führt dadurch zu einem Parkassistenten, das speziell auf die Wünsche des jeweiligen Benutzers angepasst ist. Bei einem automatischen Bewerten des Einparkvorganges kann die Park-Ist-Position mit einer gespeicherten Park-Soll-Position verglichen werden. Jeder Einparkvorgang der festgestellten Art kann somit zur Verbesserung des Parkassistenten durch den Parkassistenten selbst herangezogen werden, es handelt sich dabei um einen sogenannten "lernfähigen Parkassistenten".

Ferner kann bei einem Verfahren zum Verbessern eines Parkassistenten vorgesehen sein, dass die Rechnereinheit eine vom Fahrzeug getrennte Rechnereinheit ist, und dass die Daten des Einparkvorganges und die Bewertung des Einparkvorganges an die Rechnereinheit übertragen werden. Die Rechnereinheit kann sich insbesondere in einer Werkstatt, einem Fahrzeugteilezulieferer oder einem Fahrzeugteilehersteller befinden. Eine derartige Rechnereinheit kann insbesondere kostenintensiv sein, wodurch ein Einbau in ein Fahrzeug aus Kostengründen nicht infrage kommt. Ein Aufstellen der Rechnereinheit an zentralen Stellen ermöglicht es, dass eine Rechnereinheit zur Verbesserung von Parkassistenten vieler Fahrzeuge verwendet werden kann. Dies stellt eine erhebliche Kostenreduktion dar.

In einer Weiterentwicklung des erfindungsgemäßen Verfahrens zum Verbessern eines Parkassistenten kann vorgesehen sein, dass eine weitere Bewertung des Einparkvorganges nach der Übertragung der Daten und der Bewertung des Einparkvorganges an die Rechnereinheit durchgeführt wird. Dabei können insbesondere Einparkvorgänge, bei denen z. b. aus Zeitmangel keine Bewertung durch den Benutzer durchgeführt wurde, nachträglich bewertet werden. Auch eine nachträgliche Bewertung von Einparkvorgängen, bei denen eine automatische Bewertung und/oder eine Bewertung durch den Benutzer nicht möglich waren, ist denkbar. Da die Verbesserung des Parkassistenten des Fahrzeugs insbesondere auf der Bewertung des durchgeführten Einparkvorganges beruht, kann durch eine nachträgliche Bewertung die Qualität der Verbesserung des Parkassistenten gesteigert werden.

In einer besonders bevorzugten Ausgestaltung des erfindungsgemäßen Verfahrens zum Verbessern eines Parkassistenten kann vorgesehen sein, dass bei der Verbesserung des Parkassistenten für die festgestellte Art des Einparkvorganges durch die Rechnereinheit die Daten und die Bewertungen mehrerer Einparkvorgänge verwendet werden. Dies ermöglicht die Verwendung vieler Bewertungen und erhöht so die Qualität der Verbesserung. Dies wird insbesondere dadurch ermöglicht, da durch die Verwendung der Daten und der Bewertungen mehrerer Einparkvorgänge die Verbesserung auf einer größeren Basis an Eingangsdaten basiert und daher Mittelwerte und Tendenzen gebildet und zur Verbesserung herangezogen werden können.

Ferner kann bei einem erfindungsgemäßen Verfahren zum Verbessern eines Parkassistenten vorgesehen sein, dass eine Aufzeichnung der Daten des Einparkvorganges zu einem Zeitpunkt, insbesondere einstellbaren Zeitpunkt, vor dem Einparkvorgang beginnt. Durch die Aufzeichnung der Daten des Einparkvorganges bereits vor dem eigentlichen Einparkvorgang werden insbesondere die Detektion der Parklücke und die Einteilung in eine Parkszene und das Festlegen der Art des geplanten Einparkvorganges mit abgespeichert. Es ist daher möglich, auch diese Teile des Parkassistenten durch das erfindungsgemäße Verfahren zu verbessern. Die Qualität der Verbesserung des Parkassistenten durch das erfindungsgemäße Verfahren wird dadurch noch weiter erhöht.

In einer weiteren Ausgestaltung des erfindungsgemäßen Verfahrens kann vorgesehen sein, dass die Daten des Einparkvorganges Messergebnisse von Sensoren, insbesondere von Ultraschallsensoren und/oder Radarsensoren und/oder optischen Sensoren, umfassen. In modernen Fahrzeugen kann eine Vielzahl von Sensoren eingesetzt sein. Durch diese Sensoren ist es möglich, die Umgebung des Fahrzeuges zu bestimmen und insbesondere Abstände zu Gegenständen oder anderen Verkehrsteilnehmern festzustellen. Durch die Speicherung der Daten dieser Sensoren ist es möglich, die Umgebung des Fahrzeugs beim Durchführen des Einparkvorganges in der Rechnereinheit zu rekonstruieren und somit in die Verbesserung des Parkassistenten mit einzubeziehen. Die Daten der Sensoren erlauben daher eine besonders genaue Rekonstruktion der Umgebung des Einparkvorganges und tragen somit zur Qualität der Verbesserung des Parkassistenten des Fahrzeugs durch das erfindungsgemäße Verfahren bei.

Bei einem erfindungsgemäßen Verfahren zum Verbessern eines Parkassistenten kann ferner vorgesehen sein, dass die Daten den Einparkvorganges Fahrzeuginformationen, insbesondere Lenkeinschlag und/oder Geschwindigkeit des Fahrzeugs, umfassen. Durch die, insbesondere zeitlich aufgeschlüsselten, Fahrzeuginformationen wird die Bewegung des Fahrzeugs während des Einparkvorganges abgebildet. Insbesondere durch Lenkeinschlag oder Geschwindigkeit des Fahrzeugs, wobei die Geschwindigkeit in Vorwärts- und Rückwärtsrichtung gegeben sein kann, erlaubt es, die Bewegung des Fahrzeugs in der Rechnereinheit zu rekonstruieren. Da insbesondere bei einem automatischen Ausführen des Einparkvorganges die Lenkung und die Geschwindigkeit des Fahrzeugs durch den Parkassistenten bestimmt sind, haben diese Fahrzeuginformationen einen direkten Einfluss auf die Qualität des Einparkvorganges. Durch die Miteinbeziehung der Fahrzeuginformationen in die Verbesserung des Parkassistenten durch die Rechnereinheit kann die Qualität der Verbesserung des Parkassistenten durch die Rechnereinheit erheblich gesteigert werden.

In einer weiteren Ausgestaltung des erfindungsgemäßen Verfahrens zum Verbessern eines Parkassistenten kann vorgesehen sein, dass die Daten des Einparkvorganges Umgebungsinformationen umfassen. Umgebungsinformationen im Sinne der Erfindung sind dabei zum Beispiel Navigationsinformationen, insbesondere Funkortung- und/oder GPS-Positionen und/oder Auswertung optischer Signale, wie z. B. detektierter Verkehrsschilder oder der Parkplatzumgebung. Durch das Miteinbeziehen von Umgebungsinformationen kann der Parkassistent hinsichtlich spezieller örtlicher Gegebenheiten verbessert werden. So ist es z. B. insbesondere möglich, für Parkplätze an Straßenrändern, Großparkplätzen oder Parkhäusern unterschiedliche Arten von Einparkvorgängen festzulegen. Die Qualität in Bezug auf die örtliche Gegebenheit eines derartig verbesserten Parkassistenten wird somit gesteigert.

Gemäß einem zweiten Aspekt der Erfindung wird die Aufgabe durch ein Einparksystem zum Verbessern eines Parkassistenten eines Fahrzeugs, wobei der Parkassistent Teil des Einparksystems und zur Feststellung der Art eines geplanten Einparkvorganges sowie zu einer unterstützten oder automatischen Durchführung des festgestellten Einparkvorganges des Fahrzeugs ausgebildet ist, gelöst. Insbesondere ist das erfindungsgemäße Einparksystem derart ausgestaltet, dass der Parkassistent des Einparksystems eine Speichereinrichtung zur Speicherung von Daten des Einparkvorganges aufweist, dass das Einparksystem eine Bewertungseinrichtung zur Bewertung des Einparkvorganges und eine Rechnereinheit zur Verbesserung des Parkassistenten für die festgestellte Art des Einparkvorganges anhand der gespeicherten Daten und der Bewertung des Einparkvorgangs aufweist.

Durch die Speichereinrichtung und die dadurch mögliche Speicherung von Daten des Einparkvorgangs ist es möglich, den durchgeführten Einparkvorgang zu rekonstruieren. Die Daten können dabei insbesondere Informationen über die Geschwindigkeit des Fahrzeugs, Lenkbewegungen, Zeitpunkten von Lenkbewegungen und sämtliche Sensordaten des Fahrzeugs umfassen. Die Bewertungseinrichtung ermöglicht eine Bewertung des Einparkvorganges. Insbesondere ist dabei eine Bewertung durch den Fahrer oder eine automatische Bewertung durch das Einparksystem möglich. In die Bewertung kann zum Beispiel die benötigte Zeit für den Einparkvorgang, die Endposition des Fahrzeugs innerhalb der Parklücke, die Anzahl der benötigten Züge bis zum Erreichen der Parkposition und/oder Abstände zu den Rändern der Parklücke in die Bewertung einfließen. Auch eine gewichtete Bewertung ist denkbar. Basierend auf den gespeicherten Daten und der Bewertung kann die Rechnereinheit des Einparksystems den Parkassistenten verbessern. Dafür kann zum Beispiel die Rechnereinheit einen neuen Einparkvorgang berechnen, der bei der vorliegenden Parkszene den Einparkvorgang besser, d. h. mit einer besseren Bewertung, ausgeführt hätte. Dieser neue Einparkvorgang kann dann bei dem nächsten Parkvorgang der gleichen Art durch den Parkassistenten verwendet werden. Bei der nächsten Ausführung eines Einparkvorganges dieser Art durch den Parkassistenten kann somit durch dieses Verfahren ein besseres Ergebnis, d. h. mit einer besseren Bewertung, erreicht werden.

In einer Weiterentwicklung eines erfindungsgemäßen Einparksystems kann vorgesehen sein, dass die Rechnereinheit im Fahrzeug angeordnet ist. Die Verbesserung des Parkassistenten kann somit unmittelbar nach dem Abschluss des Einparkvorganges ausgeführt werden. Der verbesserte Parkassistent steht dem Benutzer somit sofort beim nächsten Einparkvorgang der gleichen Art zur Verfügung.

Alternativ dazu kann bei einem erfindungsgemäßen Einparksystem vorgesehen sein, dass die Rechnereinheit vom Fahrzeug getrennt vorgesehen ist. Die Rechnereinheit kann sich dabei zum Beispiel in einer Werkstatt, einem Fahrzeugteilezulieferer oder einem Fahrzeugteilehersteller befinden. Ein Aufstellen der Rechnereinheit an zentralen Stellen ermöglicht es, dass eine einzige gemeinsame Rechnereinheit zur Verbesserung von Einparksystemen vieler Fahrzeuge verwendet werden kann. Dies stellt eine erhebliche Kostenreduktion dar.

Ferner kann bei einem erfindungsgemäßen Einparksystem vorgesehen sein, dass dieses zur Ausführung eines Verfahrens gemäß dem ersten Aspekt der Erfindung ausgebildet ist. Sämtliche Vorteile, die in Bezug auf ein Verfahren gemäß dem ersten Aspekt der Erfindung beschrieben worden sind, gelten auch für ein Einparksystem, dass zur Ausführung eines derartigen Verfahrens ausgestaltet ist.

### BEVORZUGTE AUSFÜHRUNGSBEISPIELE

Das erfindungsgemäße Verfahren und seine Weiterbildungen sowie deren Vorteile werden nachfolgend anhand von Zeichnungen näher erläutert. Es zeigen jeweils schematisch.
- Figur 1: einen automatischen Einparkvorgang eines Fahrzeugs in eine Längsparklücke,
- Figur 2: ein Fahrzeug nach der Ausführung eines Einparkvorganges in einer Längsparklücke.

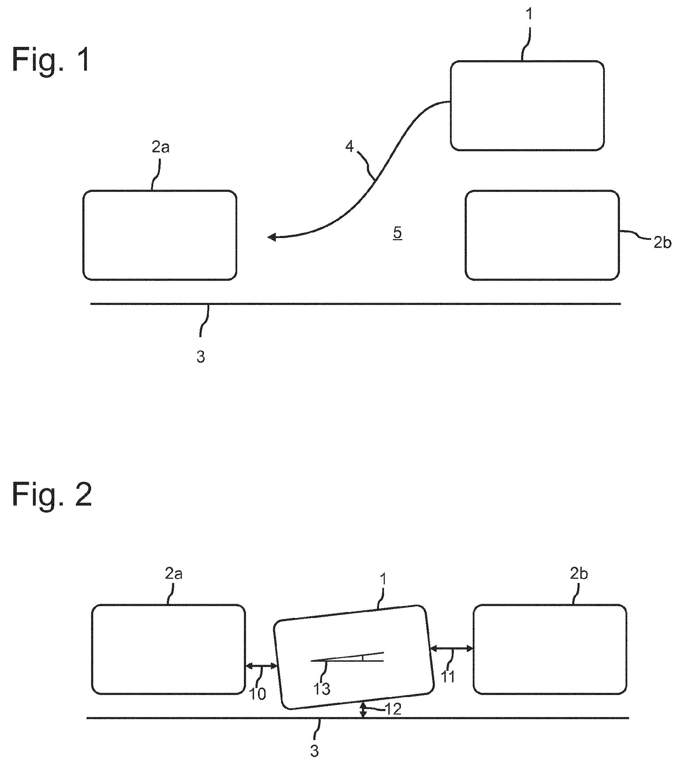

Elemente mit gleicher Funktion und Wirkungsweise sind in den Fig. 1 und 2 jeweils mit denselben Bezugszeichen versehen.

In der Fig. 1 ist ein Fahrzeug 1 gezeigt, das in eine Längsparklücke 5 einparken soll. Der geplante Einparkvorgang 4 ist dabei durch einen Pfeil symbolisiert. Die Längsparklücke 5 wird durch zwei parkende Fahrzeuge 2a, 2b und einen Bordstein 3 begrenzt. Der Einparkvorgang 4 kann sowohl automatisch, d. h. vollständig durch einen Parkassistenten, durchgeführt werden oder der Fahrer des Fahrzeugs 1 wird bei dem Einparkvorgang 4 durch den Parkassistenten unterstützt. Die Daten den Einparkvorgangs 4, insbesondere Geschwindigkeit des Fahrzeugs 1, Lenkbewegungen, Sensordaten und/oder Umgebungsinformationen werden für eine spätere Verbesserung des Parkassistenten gespeichert.

Fig. 2 zeigt das Fahrzeug 1 in der Längsparklücke zwischen den parkenden Fahrzeugen 2a, 2b in seiner Park-Ist-Position, d. h. nach Ausführung des Einparkvorganges 4. Die Position des Fahrzeugs 1 in der Parklücke kann erfindungsgemäß bewertet werden, wobei z. B. die Abstände des Fahrzeugs 1 nach hinten 10, nach vorne 11 und/oder zur Seite 12 zum Bordstein 3 in die Bewertung mit einfließen können. Auch die Position des Fahrzeugs 1 innerhalb der Parklücke, hier angedeutet durch den Winkel 13 zwischen der Längsachse des Fahrzeugs 1 und dem Bordstein 3, kann bewertet werden. Durch die Bewertung wird die Qualität des Einparkvorganges 4 festgehalten. Durch die gespeicherten Daten (s. Fig. 1) und die Bewertung des Einparkvorganges 4 kann in einer Rechnereinheit der Parkassistent verbessert werden, wodurch zukünftige Einparkvorgänge 4 zu größerer Zufriedenheit den Fahrers des Fahrzeugs 1 durchgeführt werden können.

## Patentansprüche

1. Verfahren zum Verbessern eines Parkassistenten eines Fahrzeugs (1) zur Durchführung eines unterstützten oder automatischen Einparkvorganges (4) des Fahrzeugs (1), wobei das Verfahren durch folgende Schritte gekennzeichnet ist:
a) Feststellen der Art des geplanten Einparkvorganges (4),
b) Unterstütztes oder automatisches Ausführen des Einparkvorganges (4) durch den Parkassistenten anhand der festgestellten Art des Einparkvorganges (4),
c) Speicherung von Daten des Einparkvorganges (4) im Parkassistenten, wobei die gespeicherten Daten Umgebungsinformationen umfassen,
d) Bewertung des Einparkvorganges (4),
e) Verbesserung des Parkassistenten des Fahrzeugs (1) für die festgestellte Art des Einparkvorganges (4) durch eine Rechnereinheit anhand der gespeicherten Daten und der Bewertung des Einparkvorgangs (4), wobei die Rechnereinheit vom Fahrzeug (1) getrennt vorgesehen ist.

2. Verfahren zum Verbessern eines Parkassistenten nach Anspruch 1, **dadurch gekennzeichnet, dass** bei der Verbesserung des Systems durch die Rechnereinheit die Daten und die Bewertungen mehrerer Einparkvorgänge (4) verwendet werden.

3. Verfahren zum Verbessern eines Parkassistenten nach Anspruch 1 oder 2, **dadurch gekennzeichnet, dass** die Bewertung durch den Benutzer und/oder automatisch durchgeführt wird.

4. Verfahren zum Verbessern eines Parkassistenten nach Anspruch 1 bis 3, **dadurch gekennzeichnet, dass** eine weitere Bewertung nach der Übertragung der Daten und der Bewertung des Einparkvorganges (4) an die Rechnereinheit durchgeführt wird.

5. Verfahren zum Verbessern eines Parkassistenten nach einem der Ansprüche 1 bis 4, **dadurch gekennzeichnet, dass** die Speicherung der Daten des Einparkvorganges (4) eine, insbesondere einstellbare, Zeit vor dem Einparkvorgang (4) beginnt.

6. Verfahren zum Verbessern eines Parkassistenten nach einem der Ansprüche 1 bis 5, **dadurch gekennzeichnet, dass** die gespeicherten Daten Messergebnisse von Sensoren, insbesondere von Ultraschallsensoren und/oder Radarsensoren und/oder optischen Sensoren, umfassen.

7. Verfahren zum Verbessern eines Parkassistenten nach einem der Ansprüche 1 bis 6, **dadurch gekennzeichnet, dass** die gespeicherten Daten Fahrzeuginformationen, insbesondere Lenkeinschlag und/oder Geschwindigkeit des Fahrzeugs (1), umfassen.

8. Verfahren zum Verbessern eines Parkassistenten nach einem der Ansprüche 1 bis 8, **dadurch gekennzeichnet, dass** das verbesserte System zur Durchführung eines unterstützten oder automatischen Einparkvorganges (4) eines Fahrzeugs (1) von der Rechnereinheit auf das Fahrzeug (1) übertragen wird.

9. Einparksystem zum Verbessern eines Parkassistenten eines Fahrzeugs (1), wobei der Parkassistent Teil des Einparksystems und zur Feststellung der Art eines geplanten Einparkvorganges (4) sowie zu einer unterstützten oder automatischen Durchführung des festgestellten Einparkvorganges (4) des Fahrzeugs (1) ausgebildet ist, **dadurch gekennzeichnet, dass** der Parkassistent des Einparksystems eine Speichereinrichtung zur Speicherung von Daten des Einparkvorganges (4) aufweist, wobei die gespeicherten Daten Umgebungsinformationen umfassen, dass das Einparksystem eine Bewertungseinrichtung zur Bewertung des Einparkvorganges (4) und eine Rechnereinheit zur Verbesserung des Parkassistenten für die festgestellte Art des Einparkvorganges (4) anhand der gespeicherten Daten und der Bewertung des Einparkvorgangs (4) aufweist, wobei die Rechnereinheit vom Fahrzeug (1) getrennt vorgesehen ist.

10. Einparksystem nach Anspruch 9, **dadurch gekennzeichnet, dass** die Rechnereinheit im Fahrzeug (1) angeordnet ist.

11. Einparksystem nach zumindest einem der Ansprüche 9 oder 10, **dadurch gekennzeichnet, dass** dieses zur Ausführung eines Verfahrens nach wenigstens einem der Ansprüche 1 bis 9 ausgebildet ist.

## Claims

1. Method for improving a parking assistant of a vehicle (1) for carrying out an assisted or automated parking process (4) of the vehicle (1), wherein the method is **characterized by** the following steps:
a) detecting the type of planned parking process (4),
b) assisted or automatic execution of the parking process (4) by the parking assistant with reference to the detected type of parking process (4),
c) storing data of the parking process (4) in the parking assistant, wherein the stored data comprises information on the surroundings,
d) evaluating the parking process (4),
e) improving the parking assistant of the vehicle (1) for the detected type of parking process (4) by means of a computer unit with reference to the stored data and the evaluation of the parking process (4), wherein the computer unit is provided separately from the vehicle (1).

2. Method for improving a parking assistant according to Claim 1,
**characterized in that** the data and the evaluations of a plurality of parking processes (4) are used during the improvement of the system by the computer unit.

3. Method for improving a parking assistant according to Claim 1 or 2,
**characterized in that** the evaluation is carried out by the user and/or automatically.

4. Method for improving a parking assistant according to Claims 1 to 3,
**characterized in that** a further evaluation is carried out after the transmission of the data and the evaluation of the parking process (4) to the computer unit.

5. Method for improving a parking assistant according to one of Claims 1 to 4,
**characterized in that** the storage of the data of the parking process (4) starts a time, in particular an adjustable time, before the parking process (4).

6. Method for improving a parking assistant according to one of Claims 1 to 5,
**characterized in that** the stored data comprises measurement results of sensors, in particular of ultrasonic sensors and/or radar sensors and/or optical sensors.

7. Method for improving a parking assistant according to one of Claims 1 to 6,
**characterized in that** the stored data comprises vehicle information, in particular steering lock and/or speed of the vehicle (1).

8. Method for improving a parking assistant according to one of Claims 1 to 8,
**characterized in that** the improved system for carrying out an assisted or automatic parking process (4) of a vehicle (1) is transmitted from the computer unit to the vehicle (1).

9. Parking system for improving a parking assistant of a vehicle (1), wherein the parking assistant is part of the parking system and is designed to detect the type of planned parking process (4) and to carry out the detected parking process (4) of the vehicle (1) in an assisted or automatic fashion, **characterized in that** the parking assistant of the parking system has a memory device for storing data of the parking process (4), wherein the stored data comprise information on the surroundings, **in that** the parking system has an evaluation device for evaluating the parking process (4), and a computer unit for improving the parking assistant for the detected type of parking process (4) with reference to the stored data and the evaluation of the parking process (4), wherein the computer unit is provided separately from the vehicle (1).

10. Parking system according to Claim 9, **characterized in that** the computer unit is arranged in the vehicle (1).

11. Parking system according to at least one of Claims 9 or 10, **characterized in that** the latter is designed to execute a method according to at least one of Claims 1 to 9.

## Revendications

1. Procédé d'amélioration d'un assistant de stationnement d'un véhicule (1) en vue d'accomplir une manoeuvre d'entrée en stationnement (4) assistée ou automatique du véhicule (1), le procédé étant **caractérisé par** les étapes suivantes :
a) détermination de la nature de la manoeuvre d'entrée en stationnement (4) prévue,
b) assistance ou accomplissement automatique de la manoeuvre d'entrée en stationnement (4) par l'assistant de stationnement au moyen de la nature déterminée de la manoeuvre d'entrée en stationnement (4),
c) mise en mémoire des données de la manoeuvre d'entrée en stationnement (4) dans l'assistant de stationnement, les données mises en mémoire comprenant des informations d'environnement,
d) évaluation de la manoeuvre d'entrée en stationnement (4),
e) amélioration de l'assistant de stationnement du véhicule (1) pour la nature déterminée de la manoeuvre d'entrée en stationnement (4) par une unité de calcul au moyen des données mises en mémoire et de l'évaluation de la manoeuvre d'entrée en stationnement (4), l'unité de calcul étant prévue séparée du véhicule (1).

2. Procédé d'amélioration d'un assistant de stationnement selon la revendication 1, **caractérisé en ce que** lors de l'amélioration du système par l'unité de calcul, les données et les évaluations de plusieurs manoeuvres d'entrée en stationnement (4) sont utilisées.

3. Procédé d'amélioration d'un assistant de stationnement selon la revendication 1 ou 2, **caractérisé en ce que** l'évaluation est effectuée par l'utilisateur et/ou automatiquement.

4. Procédé d'amélioration d'un assistant de stationnement selon l'une des revendications 1 à 3, **caractérisé en ce qu'**une évaluation supplémentaire est effectuée après la transmission des données et l'évaluation de la manoeuvre d'entrée en stationnement (4) au niveau de l'unité de calcul.

5. Procédé d'amélioration d'un assistant de stationnement selon l'une des revendications 1 à 4, **caractérisé en ce que** la mise en mémoire des données de la manoeuvre d'entrée en stationnement (4) commence à un temps donné, notamment réglable, avant la manoeuvre d'entrée en stationnement (4).

6. Procédé d'amélioration d'un assistant de stationnement selon l'une des revendications 1 à 5, **caractérisé en ce que** les données mises en mémoire comprennent des résultats de mesure de capteurs, notamment de capteurs à ultrasons et/ou de capteurs radar et/ou de capteurs optiques.

7. Procédé d'amélioration d'un assistant de stationnement selon l'une des revendications 1 à 6, **caractérisé en ce que** les données mises en mémoire comprennent des informations sur le véhicule, notamment le braquage et/ou la vitesse du véhicule (1).

8. Procédé d'amélioration d'un assistant de stationnement selon l'une des revendications 1 à 8, **caractérisé en ce que** le système amélioré destiné à accomplir une manoeuvre d'entrée en stationnement (4) assistée ou automatique d'un véhicule (1) est transféré de l'unité de calcul au véhicule (1).

9. Système d'entrée en stationnement destiné à améliorer un assistant de stationnement d'un véhicule (1), l'assistant de stationnement étant une partie du système d'entrée en stationnement et étant configuré pour déterminer la nature de la manoeuvre d'entrée en stationnement (4) prévue ainsi que pour une assistance ou un accomplissement automatique de la manoeuvre d'entrée en stationnement (4) du véhicule (1) déterminée, **caractérisé en ce que** l'assistant de stationnement du système d'entrée en stationnement possède un dispositif de mémorisation destiné à la mise en mémoire des données de la manoeuvre d'entrée en stationnement (4), les données mises en mémoire comprenant des informations d'environnement, **en ce que** le système d'entrée en stationnement possède un dispositif d'évaluation destiné à évaluer la manoeuvre d'entrée en stationnement (4) et une unité de calcul destinée à améliorer l'assistant de stationnement pour la nature déterminée de la manoeuvre d'entrée en stationnement (4) au moyen des données mises en mémoire et à évaluer la manoeuvre d'entrée en stationnement (4), l'unité de calcul étant prévue séparée du véhicule (1).

10. Système d'entrée en stationnement selon la revendication 9, **caractérisé en ce que** l'unité de calcul est montée dans le véhicule (1).

11. Système d'entrée en stationnement selon l'une des revendications 9 ou 10, **caractérisé en ce que** celui-ci est configuré pour mettre en oeuvre un procédé selon au moins l'une des revendications 1 à 9.
